# EUROPEAN PATENT APPLICATION

(11) **EP 4 749 600 A1**
(43) Date of publication of application: **27.05.2026**
(21) Application number: 24845943.0
(22) Date of filing: 19.07.2024
(51) Int. Cl.: G08G 5/00, B64F 1/36, B64F 1/22, B60L 58/10, B60L 53/66, B60L 53/10, G06Q 50/40, G06Q 50/10, E04H 6/44

(54) **INTEGRATED AIR MOBILITY FLIGHT CONTROL SYSTEM AND CONTROL METHOD THEREFOR**

(30) Priority: 21.07.2023 KR 20230095391; 29.12.2023 KR 20230196581
(71) Applicant: Hyundai Elevator Co., Ltd., Chungju-si, Chungcheongbuk-do 27329 (KR)
(72) Inventor: KIM, Hyun Goo, Chungju-si Chungcheongbuk-do 27329 (KR); KIM, Sung Gyun, Chungju-si Chungcheongbuk-do 27329 (KR)
(74) Representative: Baldus, Oliver
(86) International application number: PCT/KR2024/010435
(87) International publication number: WO 2025/023641

(57) **Abstract**

An integrated air mobility flight control system, according to one embodiment of the present invention, includes: an aircraft battery checking module configured to check a battery capacity of a UAM aircraft parked at a vertiport; a flight-related battery calculation module configured to check a flight distance according to flight information and to calculate a battery capacity for the flight distance; and an aircraft assignment module configured to assign the UAM aircraft for the flight information based on battery capacity information of the UAM aircraft.

## Description

### [Technical Field]

The present invention relates to an integrated air mobility flight control system and a method of controlling the same.

### [Background Art]

In response to demand for reduction of exhaust gas emissions to prevent global warming, the global urban air mobility (UAM) market is rapidly expanding.

That is, a revolution in the transportation sector and development of new technologies are required to reduce emissions from ground transportation, which account for about 16% of global carbon dioxide emissions. Furthermore, to address severe ground traffic congestion exacerbated by urban growth and the resulting degradation of the urban environment, it is necessary to build an urban air traffic system and integrate the same with the existing ground transportation system.

A vertiport, which is a specialized airport for take-off and landing of UAM aircraft, may include takeoff and landing areas and a hangar.

UAM aircraft can be moved from the runway to the hangar for charging, maintenance, and the like.

As air mobility generally adopts electric vertical takeoff and landing (eVTOL), battery capacity can be a critical factor in managing operations.

However, specific techniques for integrated air mobility control are not yet available.

### [Disclosure]

### [Technical Problem]

It is one aspect of the present invention to provide an integrated air mobility flight control system that can check battery capacity of UAM aircraft and enables flight dispatch according to flight schedules based on the checked battery capacity, and a method of controlling the same.

It is another aspect of the present invention to provide an integrated air mobility flight control system that can check battery capacity of a UAM aircraft scheduled to land at a departure vertiport and enables flight dispatch according to flight schedules based on the checked battery capacity, and a method of controlling the same.

It is a further aspect of the present invention to provide an integrated air mobility flight control system that enables flight dispatch according to flight schedules using UAM aircraft in transit vertiports near a flight route, and a method of controlling the same.

It is yet another aspect of the present invention to provide an integrated air mobility flight control system that enables flight dispatch according to flight schedules using connecting transportation services at transit vertiports in the vicinity of a flight route, and a method of controlling the same.

It is yet another aspect of the present invention to provide an integrated air mobility flight control system that can be used for selective ultrafast charging of UAM aircraft and enables flight dispatch according to flight schedules based on charging time data, and a method of controlling the same.

It is yet another aspect of the present invention to provide a seamless transportation system for users as much as possible by considering and reflecting eVTOL charging in existing MaaS (Mobility as a Service).

### [Technical Solution]

In accordance with one aspect of the present invention, an integrated air mobility flight control system includes: an aircraft battery checking module configured to check a battery capacity of a UAM aircraft parked at a vertiport; a flight-related battery calculation module configured to check a flight distance according to flight information and to calculate a battery capacity for the flight distance; and an aircraft assignment module configured to assign the UAM aircraft for the flight information based on battery capacity information of the UAM aircraft.

The integrated air mobility flight control system may further include a connecting flight checking and providing module configured to check a transit vertiport in the vicinity of a flight route and to check and provide connecting UAM aircraft information of the transit vertiport, wherein the aircraft assignment module assigns a UAM aircraft for the flight information based on the connecting UAM aircraft information.

The integrated air mobility flight control system may further include: a connecting transportation checking and providing module configured to check a transit vertiport in the vicinity of a flight route and to check and provide connecting transportation information on connecting transportation at the transit vertiport, wherein the aircraft assignment module assigns a UAM aircraft for the flight information based on the connecting transportation information.

In the integrated air mobility flight control system, the aircraft battery checking module may further include a charging station including a charging module, and the charging module may provide charging information of the UAM aircraft to the aircraft battery checking module.

In the integrated air mobility flight control system, the charging station may further include a charging power control module configured to selectively provide an output power of a dispenser of the charging module for ultrafast charging.

In the integrated air mobility flight control system, the aircraft battery checking module may check a battery capacity of a UAM aircraft scheduled to arrive at the vertiport.

In accordance with another aspect of the present invention, a method of controlling an integrated air mobility flight control system includes: a flight information checking step, in which destination information and a flight distance to a destination are checked; a flight-related battery capacity calculating step, in which a battery capacity for the flight distance is calculated based on the flight distance determined in the flight information checking step; an aircraft battery capacity and charging information checking step, in which a battery capacity of a UAM aircraft parked at a departure vertiport and an estimated charging time of the UAM aircraft are checked; and a flight-target aircraft determination and assignment information provision step, in which a flight range is checked based on the battery capacity of the UAM aircraft, a UAM aircraft matching a flight schedule is determined, and assignment information is provided.

In the method of controlling an integrated air mobility flight control system, the aircraft battery capacity and charging information checking step may include selectively performing ultrafast charging for UAM aircraft through a charging power control module.

The method of controlling an integrated air mobility flight control system may further include: a transit and connecting flight checking step, in which a transit vertiport in the vicinity of a flight route and a battery capacity of a connecting UAM aircraft in the transit vertiport are checked, upon determining in the aircraft battery capacity and charging information checking step that the battery capacity of the UAM aircraft in the vertiport is insufficient to arrive at the destination.

The method of controlling an integrated air mobility flight control system may further include a connecting transportation checking step, in which a connectable transportation is further checked, after the transit and connecting flight checking step.

The method of controlling an integrated air mobility flight control system may further include: collecting information on an additional UAM aircraft scheduled to arrive at the departure vertiport, in which a battery capacity of the additional UAM aircraft is checked and compared with a battery capacity to be consumed from the departure vertiport to the destination, and a UAM aircraft is determined based on comparison result information.

### [Advantageous Effects]

Embodiments of the present invention enable efficient flight control of air mobility based on battery capacity and secure assignable UAM aircraft using not only parked UAM aircraft but also UAM aircraft scheduled for landing.

In addition, embodiments of the present invention enable more efficient flight control of air mobility through air mobility and connecting transportation in transit vertiports in the vicinity of a flight route.

Furthermore, embodiments of the present invention improve usability of flight control through selective ultrafast charging while utilizing charging time for flight control.

Furthermore, embodiments of the present invention provide users with a seamless transportation system as much as possible by considering and reflecting eVTOL charging in existing MaaS (Mobility as a Service).

### [Description of Drawings]

FIG. 1 is a schematic diagram of an integrated air mobility flight control system according to a first embodiment of the present invention.
FIG. 2 is a schematic diagram of an integrated air mobility flight control system according to a second embodiment of the present invention.
FIG. 3 is a flowchart schematically illustrating a method of controlling the integrated air mobility flight control system shown in FIG. 1.
FIG. 4 is a flowchart schematically illustrating a method of controlling the integrated air mobility flight control system shown in FIG. 2.
FIG. 5 is a flowchart illustrating an embodiment of the method of controlling the integrated air mobility flight control system shown in FIG. 3.
FIG. 6 is a flowchart illustrating an embodiment of the method of controlling the integrated air mobility flight control system shown in FIG. 4.
FIG. 7 is a diagram illustrating a technical implementation of the integrated air mobility flight control system according to the first embodiment.
FIG. 8 is a diagram illustrating a technical implementation of the integrated air mobility flight control system according to the second embodiment.

### [Best Mode]

Hereinafter, exemplary embodiments of the present invention will be described in detail with reference to the accompanying drawings such that the present invention can be easily implemented by those skilled in the art. It should be understood that the present invention may be embodied in different ways and is not limited to the following embodiments.

In the drawings, portions irrelevant to the description will be omitted for clarity. Like components will be denoted by like reference numerals throughout the specification.

As used herein, the terms "includes", "comprises", "including" and/or "comprising" specify the presence of stated features, steps, operations, elements, and/or components, but do not preclude the presence or addition of one or more other features, steps, operations, elements, components, and/or groups.

It will be understood that the invention described in this disclosure is not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of" depending on the context. The expression "configured (or set up) to" may not necessarily mean "specifically designed (hardware wise) to" in a hardware sense. Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matters briefly described herein.

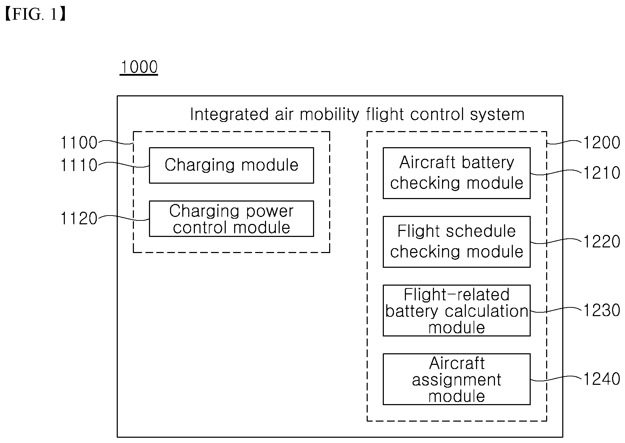

FIG. 1 is a schematic diagram of an integrated air mobility flight control system according to a first embodiment of the present invention.

An integrated air mobility flight control system 1000 provides integrated control over charging and flight of an electric vertical takeoff and landing (eVTOL) aircraft operating at an air mobility terminal (for example, vertiport).

The integrated air mobility control system 1000 may be realized as an integrated flight control system of an urban vertiport.

An eVTOL, variously referred to as a personal air vehicle (PAV), flying car, air taxi, and the like, refers to a futuristic urban air mobility (UAM) aircraft that can transport passengers or cargo in a demand-responsive manner.

Referring to FIG. 1, the integrated air mobility flight control system 1000 may include a charging station 1100 and a controller 1200.

More specifically, the charging station 1100 charges a UAM aircraft parked at a vertiport.

The charging station 1100 may include a charging module 1110, a charging power control module 1120, and a charging information provision module 1130.

The charging module 1110 may be realized as a wired or wireless charging module and may include a power converter and a dispenser.

The dispenser may include a cable and a plug.

The charging module 1110 may provide charging information, such as a charging time of a UAM aircraft and the like, to an aircraft battery checking module 1210.

The charging power control module 1120 adjusts power of the charging module 1110.

That is, the charging power control module 1120 may selectively provide output power of the dispenser, which may be referred to as "ultrafast charging".

For example, for ultrafast charging, in a configuration of a 3 MW power converter and three sets of dispensers, the charging power control module 1120 may set a first dispenser to 2 MW, a second dispenser to 1 MW, and a third dispenser to an idle state, instead of setting a 1 MW charge per dispenser.

With this configuration, different output power per charger can be realized to ensure on-demand and on-time boarding in response to customer requests.

Accordingly, the charging station 1100 according to the present invention enables a more efficient battery charging operation.

The charging information provision module 1130 provides charging information in real time.

Next, the controller 1200 includes an aircraft battery checking module 1210, a flight schedule checking module 1220, a flight-related battery calculation module 1230, and an aircraft assignment module 1240.

The aircraft battery checking module 1210 checks a battery capacity of a UAM aircraft in the vertiport.

The battery capacity refers to the amount of available battery power.

The aircraft battery checking module 1210 may further identify battery capacity information of a UAM aircraft scheduled to arrive at the corresponding vertiport.

To this end, battery capacity information of a UAM aircraft flying to the corresponding vertiport may be obtained in real time. In addition, the battery capacity information of the corresponding UAM aircraft before departure from the vertiport may be obtained through the vertiport from which the corresponding UAM aircraft has departed.

The flight schedule and flight information checking module 1220 checks flight schedule information to assign UAM aircraft according to the flight schedule and verifies a flight distance according to the flight schedule.

The flight-related battery capacity calculation module 1230 checks a flight distance according to the flight information and calculates a battery capacity (or battery usage) for the flight distance.

The flight-related battery capacity calculation module 1230 may also calculate a charging time for each battery capacity. The flight-related battery capacity calculation module 1230 may calculate a charging time according to output power provided differentially through the charging power control module.

Furthermore, the output power of each charger may be varied to ensure on-demand and on-time boarding based on customer boarding requests.

The aircraft assignment module 1240 may assign a UAM aircraft for each scheduled flight based on the flight information, the aircraft battery capacity information, and the charging time information.

That is, the aircraft assignment module 1240 may assign the UAM aircraft by matching the battery capacity information calculated by the flight-related battery capacity calculation module 1230 with the flight information.

The aircraft assignment module 1240 may calculate the charging time of the UAM aircraft calculated by the flight-related battery calculation module 1230 and may assign a UAM aircraft corresponding to a flight schedule by integrating the calculated result with a current battery capacity.

The aircraft assignment module 1240 may assign flight schedules to UAM aircraft based on the battery capacity information and estimated battery charging times of UAM aircraft flying to the corresponding vertiport.

The aircraft battery checking module may check a battery capacity of a UAM aircraft scheduled to arrive at the vertiport and, if a battery capacity of a UAM aircraft scheduled to arrive at a departure vertiport satisfies the battery capacity according to the flight information, the aircraft assignment module 1240 may assign the corresponding UAM aircraft.

The aircraft assignment module 1240 may compare a charging time of an existing UAM aircraft with an arrival time of a scheduled UAM aircraft to prioritize a UAM aircraft with the earliest takeoff time.

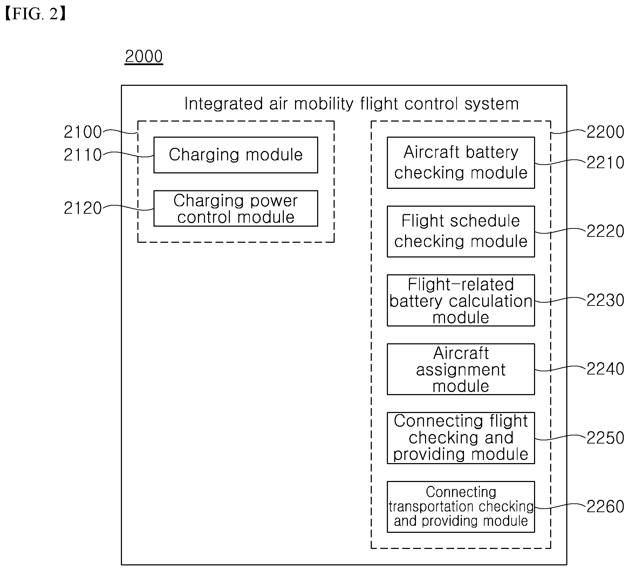

FIG. 2 is a schematic diagram of an integrated air mobility flight control system according to a second embodiment of the present invention.

More specifically, the integrated air mobility flight control system 2000 is different from the integrated air mobility flight control system 1000 shown in FIG. 1 excluding a technical configuration for providing connecting UAM aircraft and connecting transportation.

The integrated air mobility flight control system 2000 includes a charging station 2100 and a controller 2200.

The charging station 2100 may include a charging module 2110, a charging power control module 2120, and a charging information provision module 2130.

The controller 2200 includes an aircraft battery checking module 2210, a flight schedule checking module 2220, a flight-related battery calculation module 2230, an aircraft assignment module 2240, a connecting flight checking and providing module 2250 and a connecting transportation checking and providing module 2260.

The charging station 2100, the aircraft battery checking module 2210, the flight schedule checking module 2220, and the flight-related battery calculation module 2230 of the integrated air mobility flight control system 2000 are the same as the charging station 1100, the aircraft battery checking module 1210, the flight schedule checking module 1220, and the flight-related battery calculation module 1230 of the integrated air mobility flight control system 1000 shown in FIG. 1, and a detailed description thereof will be omitted herein.

The connecting flight checking and providing module 2250 may check a transit vertiport located in the vicinity of a flight route and provide connecting UAM aircraft information for the transit vertiport.

The connecting transportation checking and providing module 2260 may check and provide information on connecting transportation, such as vehicles and the like, in addition to the connecting UAM aircraft in the transit vertiport.

The aircraft assignment module 2240 may calculate a charging time of the UAM aircraft calculated by the flight-related battery calculation module 2230 and may assign a UAM aircraft corresponding to the flight schedule through integration of the calculated charging time with a current battery capacity thereof.

The aircraft assignment module 2240 may assign flight schedules to the corresponding UAM aircraft based on the battery capacity information and estimated battery charging times of UAM aircraft flying to the corresponding vertiport.

The aircraft assignment module 2240 may further assign connecting UAM aircraft in the transit vertiport to the flight information based on additional information from the connecting flight checking and providing module 2250.

The aircraft assignment module 2240 may further assign connecting transportation at the transit vertiport to the flight information based on additional information received from the connecting transportation checking and providing module 2260.

Here, the connecting transportation may be realized as an autonomous vehicle.

With the above configuration, the integrated air mobility flight control system 2000 according to the second embodiment can minimize a travel time by providing the connecting UAM aircraft in the transit vertiport, when it is difficult to fly to a destination by UAM aircraft in the corresponding vertiport and a long charging time is required.

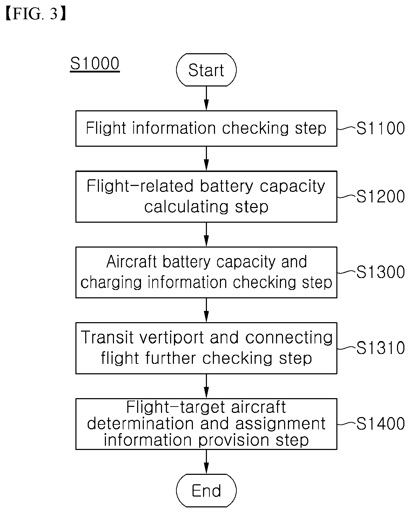

FIG. 3 is a flowchart schematically illustrating a method of controlling the integrated air mobility flight control system shown in FIG. 1.

Referring to FIG. 3, an integrated air mobility flight control method (S1000) includes a flight information checking step (S1100), a flight-related battery capacity calculating step (S1200), an aircraft battery capacity and charging information checking step (S1300), and a flight-target aircraft determination and assignment information provision step (S1400).

More specifically, in the flight information checking step (S1100), destination information and a flight distance to a destination are checked.

In the flight-related battery capacity calculating step (S1200), a battery capacity for flight distance flying is calculated based on the flight distance checked in the flight information checking step (S1100).

In the aircraft battery capacity and charging information checking step (S1300), a battery capacity of a UAM aircraft parked at a vertiport is checked.

Further, in the aircraft battery capacity and charging information checking step (S1300), battery capacity information of a UAM aircraft scheduled to arrive at the corresponding vertiport may be further checked.

In the aircraft battery capacity and charging information checking step (S1300), an estimated battery charging time of a UAM aircraft, the capacity of which has been checked, may be checked.

In the flight-target aircraft determination and assignment information provision step (S1500), a flight range is checked based on a battery capacity of an UAM aircraft, a UAM aircraft matching a flight schedule is determined and assignment information is provided to users.

Here, if the battery capacity of the UAM aircraft does not satisfy the flight range, the battery charging time may be checked, and the assignment information and takeoff time corresponding thereto may be provided to users.

Further, in the aircraft battery capacity and charging information checking step (S1300), ultrafast charging may be selectively performed through the charging power control module.

The integrated air mobility flight control method (S1000) may further include a transit vertiport and connecting flight further checking step (S1310).

In the transit vertiport and connecting flight further checking step (S1310), a transit vertiport located in the vicinity of a flight route and a battery capacity of a connecting UAM aircraft in the transit vertiport are checked, upon determining in the aircraft battery capacity and charging information checking step (S1300) that the battery capacity of the UAM aircraft in the vertiport is insufficient to arrive at the destination.

Here, in the flight-target aircraft determination and assignment information provision step (S1500), a UAM aircraft for efficient flight control may be determined in consideration of the charging time of the UAM aircraft in the vertiport and an available time of the UAM aircraft in the transit vertiport.

Here, in the flight-target aircraft determination and assignment information provision step (S1500), an estimated arrival time may be taken into account. Furthermore, in determination of flight-target UAM aircraft, assignment of the UAM aircraft may be determined in consideration of passenger preferences, assignment of the overall UAM aircraft, and the flight schedule.

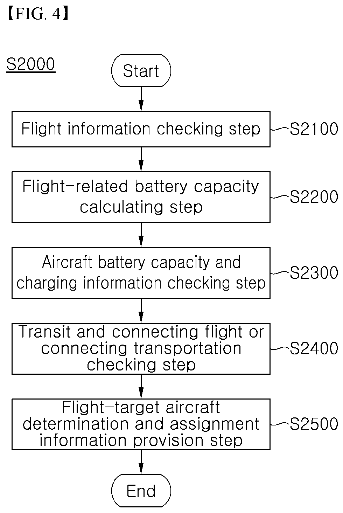

FIG. 4 is a flowchart schematically illustrating a method of controlling the integrated air mobility flight control system shown in FIG. 2.

More specifically, an integrated air mobility flight control method (S2000) is different from the integrated air mobility flight control method (S1000) shown in FIG. 3 excluding the step of checking connecting transportation to employ the checked connecting transportation as assignment information.

Referring to FIG. 4, the integrated air mobility flight control method (S2000) includes a flight information checking step (S2100), a flight-related battery capacity calculating step (S2200), an aircraft battery capacity and charging information checking step (S2300), a transit and connecting flight or connecting transportation checking step (S2400), and a flight-target aircraft determination and assignment information provision step (S2500).

The flight information checking step (S2100), the flight-related battery capacity calculating step (S2200), and the aircraft battery capacity and charging information checking step (S2300) are the same as the flight information checking step (S1100), the flight-related battery capacity calculating step (S1200), and the aircraft battery capacity and charging information checking step (S1300) of the integrated air mobility flight control method (S1000), and a detailed description thereof will be omitted.

In the transit and connecting flight or connecting transportation checking step (S2400), a transit vertiport located in the vicinity of a flight route and a battery capacity of a connecting UAM aircraft in the transit vertiport are checked, upon determining in the aircraft battery capacity and charging information checking step (S2300) that the battery capacity of the UAM aircraft in the vertiport is insufficient to fly to a destination.

In the transit and connecting flight or connecting transportation checking step (S2400), connectable transportation may be further checked in addition to the connecting UAM aircraft.

That is, the connectable transportation at the transit vertiport is checked. The connectable transportation may be a car, a train, a ship, and the like.

In addition, the connectable transportation may be an autonomous vehicle in consideration of passenger convenience.

Next, in the flight-target aircraft determination and assignment information provision step (S2500), a UAM aircraft for efficient flight control may be determined in consideration of the charging time of the UAM aircraft in the vertiport and an available time of the UAM aircraft in the transit vertiport.

In addition, a connecting transportation at a transit vertiport may be determined instead of the connecting UAM aircraft.

That is, the connecting transportation may be assigned if a final destination of a passenger is more than a preset distance from a destination vertiport and there are other transportations for the shortest time or shortest distance to the destination.

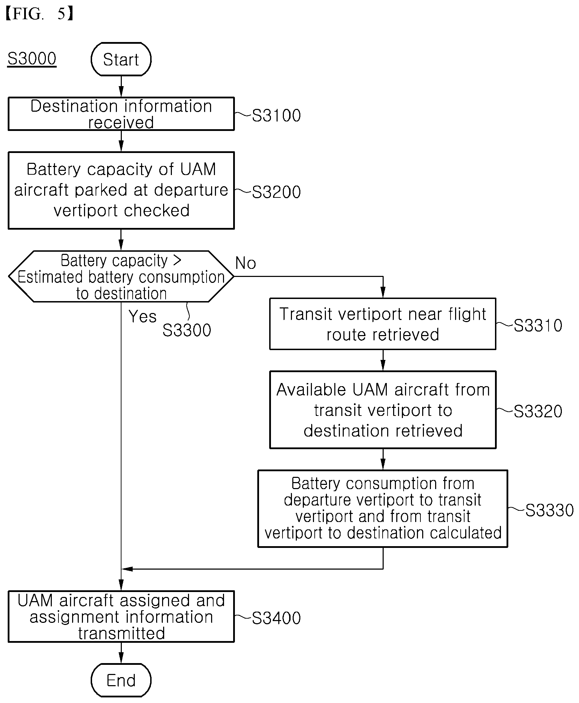

FIG. 5 is a flowchart illustrating an embodiment of the method of controlling the integrated air mobility flight control system shown in FIG. 3.

Referring to FIG. 5, a control method of an air mobility takeoff and landing airfield security system (S3000) includes the steps of: receiving destination information (S3100); checking a battery capacity of a UAM aircraft in a departure vertiport (S3200); comparing the battery capacity of the UAM aircraft with a battery capacity available to satisfy a flight schedule (S3300); and assigning UAM aircraft and transmitting assignment information (S3400).

More specifically, the step of receiving destination information (S3100) is a step of receiving destination information for calculation of a flight-related battery capacity.

The step of checking a battery capacity of a UAM aircraft in a departure vertiport (S3200) is a step of checking the battery capacity of the UAM aircraft parked at the departure vertiport.

The step of comparing the battery capacity of the UAM aircraft with a battery capacity available to satisfy a flight schedule (S3300) is a step of determining whether the battery capacity of the UAM aircraft parked at the departure vertiport is greater than an estimated battery capacity of the UAM aircraft to the destination.

In the step of assigning UAM aircraft and transmitting assignment information (S3400), a corresponding UAM aircraft is assigned and assignment information is transmitted, if the battery capacity of the UAM aircraft is greater than the estimated battery capacity of the UAM aircraft to the destination.

On the other hand, if no UAM aircraft having an estimated battery capacity to the destination is identified in the step of comparing the battery capacity of the UAM aircraft with a battery capacity available to satisfy a flight schedule (S3300), the step of retrieving a transit vertiport in the vicinity of a flight route (S3310) is carried out

The step of retrieving a transit vertiport in the vicinity of a flight route (S3310) is a step of retrieving a transit vertiport in the vicinity of a flight route to the destination.

In the step of retrieving an available UAM aircraft from the transit vertiport to the destination (S3320), a UAM aircraft capable of flying from the transit vertiport to the destination is retrieved, when the transit vertiport is identified in the step of retrieving a transit vertiport in the vicinity of a flight route (S3310).

In the step of calculating battery consumption from the departure vertiport to the transit vertiport and estimated battery consumption from the transit vertiport to the destination vertiport (S3330), the battery consumption from the departure vertiport to the transit vertiport is checked. In addition, the estimated battery consumption from the transit vertiport to the destination vertiport is also checked.

In the step of assigning UAM aircraft and transmitting assignment information (S3400), a UAM aircraft to the transit vertiport and a connecting UAM aircraft from the transit vertiport to the destination are assigned, and assignment information thereof is transmitted to passengers and the transit vertiport.

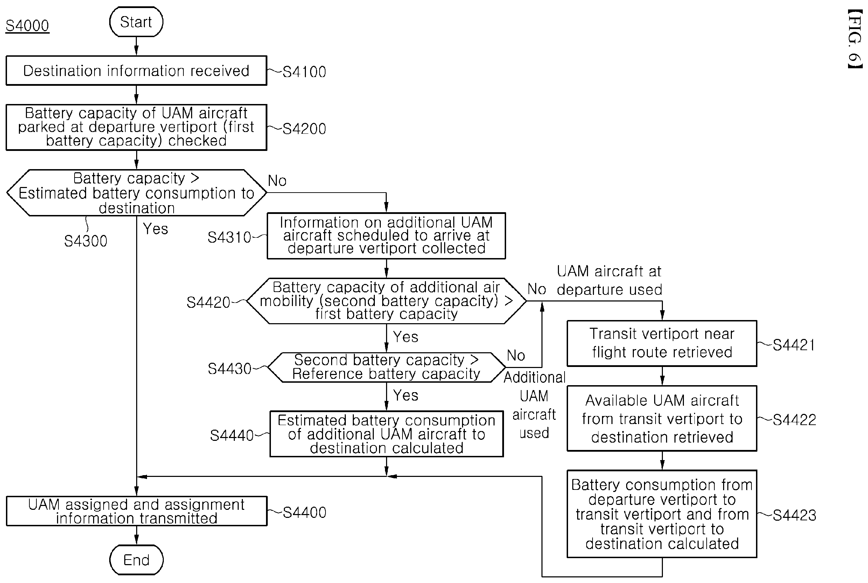

FIG. 6 is a flowchart illustrating an embodiment of the control method shown in FIG. 4.

More specifically, an integrated air mobility flight control method S4000 is different from the integrated air mobility flight control method S3000 shown in FIG. 5 excluding that a connecting transportation is checked and is used as assignment information.

Referring to FIG. 6, a control method of an air mobility takeoff and landing airfield security system (S4000) includes the steps of: receiving destination information (S4100), checking a battery capacity (first battery capacity) of a UAM aircraft in a departure vertiport (S4200), comparing the battery capacity of the UAM aircraft with a battery capacity available to satisfy a flight schedule (S4300), and assigning UAM aircraft and transmitting assignment information (S4400).

Further, if a preset condition is not satisfied in the step of comparing the battery capacity of the UAM aircraft with the battery capacity available to satisfy the flight schedule (S4300), the control method further includes the following steps.

That is, the control method further includes the steps of: collecting information on an additional UAM aircraft scheduled to arrive at the departure vertiport (S4310); determining whether a battery capacity of the additional UAM aircraft (second battery capacity) is greater than the first battery capacity (S4420); determining whether the second battery capacity is greater than a reference battery capacity (S4430); and calculating estimated battery consumption of the additional UAM aircraft to the destination (S4440).

Further, if preset conditions are not satisfied in the step of determining whether the battery capacity of the additional UAM aircraft (second battery capacity) is greater than the first battery capacity (S4420) and the step of determining whether the second battery capacity is greater than the reference battery capacity (S4430), the control method further includes the following steps.

That is, the control method further includes the steps of: retrieving a transit vertiport in the vicinity of a flight route (S4421); retrieving an available UAM aircraft from a transit vertiport to the destination (SS4422); and calculating battery consumption from the departure vertiport to the transit vertiport and estimated battery consumption from the transit vertiport to a destination vertiport (S4423).

Further, the step of receiving destination information (S4100), the step of checking a battery capacity (first battery capacity) of a UAM aircraft in a departure vertiport (S4200), and the step of comparing the battery capacity of the UAM aircraft with a battery capacity available to satisfy a flight schedule (S4300) are the same as the step of receiving destination information (S3100), the step of checking a battery capacity of a UAM aircraft in a departure vertiport (S3200), and the step of comparing the battery capacity of the UAM aircraft with a battery capacity available to satisfy a flight schedule (S3300), and a detailed description thereof will be omitted.

Next, upon determining in the step of comparing the battery capacity of the UAM aircraft with a battery capacity available to satisfy the flight schedule (S4300) that the battery capacity of the UAM aircraft in the departure vertiport is not greater than the estimated battery consumption to the destination, the step of collecting information on an additional UAM aircraft scheduled to arrive at the departure vertiport (S4310) is carried out.

In the step of collecting information on an additional UAM aircraft scheduled to arrive at the departure vertiport (S4310), information on a UAM aircraft scheduled to arrive at the departure vertiport among external UAM aircraft under flight is collected.

If the information of the additional UAM aircraft is confirmed in the step of collecting information on an additional UAM aircraft scheduled to arrive at the departure vertiport (S4310), the step of determining whether a battery capacity of the additional UAM aircraft (second battery capacity) is greater than the first battery capacity (S4420) is carried out.

That is, it is determined whether the battery capacity of the additional UAM aircraft (second battery capacity) is greater than the first battery capacity (battery capacity of the UAM aircraft parked at the departure).

Then, upon determining that the second battery capacity is greater than the first battery capacity (battery capacity of the UAM aircraft parked at the departure), the step of determining whether the second battery capacity is greater than a reference battery capacity (battery capacity to be consumed from the departure to the destination) (S4430) is carried out.

Upon determining in the step of determining whether the second battery capacity is greater than a reference battery capacity (battery capacity to be consumed from the departure to the destination) (S4430) that the second battery capacity is greater than the reference battery capacity (battery capacity to be consumed from the departure to the destination), the step of calculating estimated battery consumption of the additional UAM aircraft to the destination (S4440) is carried out.

Next, in the step of calculating estimated battery consumption of the additional UAM aircraft to the destination (S4440), the estimated battery capacity of the additional UAM aircraft to the destination is calculated, and the step of assigning UAM aircraft and transmitting assigning information (S4400) is carried out to assign the additional UAM aircraft and to transmit the assignment information to passengers or the additional UAM aircraft.

Further, if the preset conditions are not satisfied in the step of determining whether the battery capacity of the additional UAM aircraft (second battery capacity) is greater than the first battery capacity (S4420) and the step of determining whether the second battery capacity is greater than the reference battery capacity (S4430), the control method may further include the following steps.

That is, upon determining in the step of determining whether the battery capacity of the additional UAM aircraft (second battery capacity) is greater than the first battery capacity (S4420) that the battery capacity of the additional UAM aircraft (second battery capacity) is less than the first battery capacity, a UAM aircraft parked at the departure vertiport is used and the step of retrieving a transit vertiport in the vicinity of a flight route (S4421) is carried out.

In addition, upon determining in the step of determining whether the second battery capacity is greater than the reference battery capacity (S4430) that the battery capacity of the additional UAM aircraft is less than the reference battery capacity which is a battery capacity that can be consumed from the departure vertiport to the destination, the additional UAM aircraft is used and the step of retrieving a transit vertiport in the vicinity of a flight route (S4421) is carried out.

In the step of retrieving a transit vertiport in the vicinity of a flight route (S4421), a transit vertiport in the vicinity of the flight route to the destination is retrieved.

In the step of retrieving an available UAM aircraft from a transit vertiport to the destination (SS4422), a UAM aircraft or a connecting transportation from the transit vertiport to the destination is retrieved, when the transit vertiport is identified in the step of retrieving a transit vertiport in the vicinity of a flight route (S4421).

Next, the control method further includes the step of calculating battery consumption from the departure vertiport to the transit vertiport and estimated battery consumption from the transit vertiport to the destination vertiport (S4423).

In the step of calculating battery consumption from the departure vertiport to the transit vertiport and estimated battery consumption from the transit vertiport to the destination vertiport (S4423), in which the battery consumption from the departure vertiport to the transit vertiport is checked. In addition, the estimated battery consumption from the transit vertiport to the destination vertiport is also checked.

Next, in the step of assigning UAM aircraft and transmitting assignment information (S4400), a UAM aircraft to the transit vertiport and a connecting UAM aircraft from the transit vertiport to the destination are assigned and assignment information thereof is transmitted to passengers and the transit vertiport.

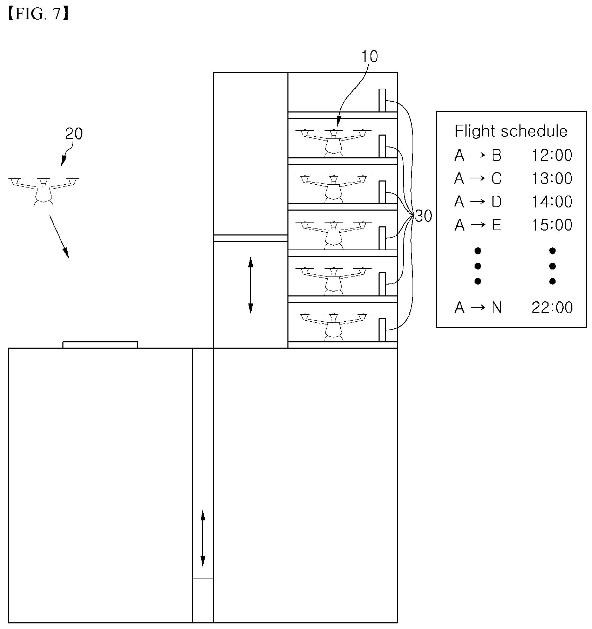

FIG. 7 is a diagram illustrating a technical implementation of the integrated air mobility flight control system according to the first embodiment.

More specifically, the integrated air mobility flight control system may be applied to a vertical takeoff and landing airfield (vertiport) for air mobility.

The vertiport may include a takeoff area, a landing area, and a hangar.

The vertiport may be constructed on the roof of a building.

Furthermore, the hangar of the vertiport may be composed of multiple stories, and each of the takeoff area and the landing area may be selectively located on the roof of the building or on the roof of the hangar.

A departure vertiport is provided with charging stations 30, and UAM aircraft 10 land there.

In addition, an external UAM aircraft 20 is in flight toward the departure vertiport.

Here, the charging stations 30 may selectively provide output power of the dispenser for ultrafast charging through the charging power control module 1120 (see FIG. 1).

That is, ultrafast charging can be selectively performed for the parked UAM aircraft 10 according to flight schedules.

As described above, the integrated air mobility flight control system according to the present invention is capable of efficiently assigning air mobility to flight schedules according to destinations and flight times.

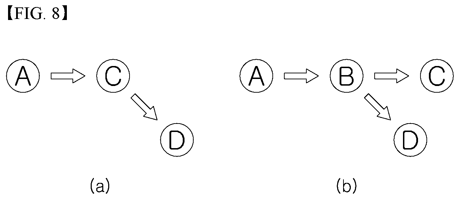

FIG. 8 is a diagram illustrating a technical implementation of the integrated air mobility flight control system according to the second embodiment.

In FIG. 8, (a) is a schematic usage diagram for a flight from a departure vertiport A to a destination D via a transit vertiport C.

In FIG. 8, (b) is a schematic usage diagram of a flight from a departure vertiport A to a plurality of destinations C, D via a transit vertiport B.

More specifically, if UAM aircraft transport multiple passengers from a departure vertiport A and are scheduled to arrive at final destinations C, D, a UAM aircraft in a transit vertiport B may be assigned to each of the final destinations C, D.

If two UAM aircraft are not available at the transit vertiport B, a UAM aircraft may be provided for a flight to the destination D via the transit vertiport C or a separate transportation at the transit vertiport B may be provided.

As such, the integrated air mobility flight control system enables integrated control of more three-dimensional and complex flight schedules.

Although some exemplary embodiments have been described with reference to the accompanying drawings, it should be understood that the foregoing embodiments are provided for illustration only and are not to be in any way construed as limiting the invention, and that various modifications, changes, alterations, and equivalents can be made by those skilled in the art without departing from the spirit and scope of the invention. For example, even when the invention described herein is performed in a different order than described herein and/or the components of the described systems, structures, devices, circuits, and the like are combined or assembled in a different form than described herein or are substituted or replaced by other components or equivalents thereto, suitable results can be achieved.

Therefore, other implementations, other embodiments, and equivalents to the appended claims fall within the scope of the appended claims.

## Claims

1. An integrated air mobility flight control system comprising:
an aircraft battery checking module configured to check a battery capacity of a UAM aircraft parked at a vertiport;
a flight-related battery calculation module configured to check a flight distance according to flight information and to calculate a battery capacity for the flight distance; and
an aircraft assignment module configured to assign an UAM aircraft for the flight information based on battery capacity information of the UAM aircraft.

2. The integrated air mobility flight control system according to claim 1, further comprising:
a connecting flight checking and providing module configured to check a transit vertiport in the vicinity of a flight route and to check and provide connecting UAM aircraft information of the transit vertiport,
wherein the aircraft assignment module assigns a UAM aircraft for the flight information based on the connecting UAM aircraft information.

3. The integrated air mobility flight control system according to claim 1, further comprising:
a connecting transportation checking and providing module configured to check a transit vertiport in the vicinity of the flight route and to check and provide connecting transportation information on connecting transportation at the transit vertiport,
wherein the aircraft assignment module assigns a UAM aircraft for the flight information based on the connecting transportation information.

4. The integrated air mobility flight control system according to claim 1, wherein the aircraft battery checking module further comprises a charging station comprising a charging module, the charging module providing charging information of the UAM aircraft to the aircraft battery checking module.

5. The integrated air mobility flight control system according to claim 4, wherein the charging station further comprises a charging power control module configured to selectively provide an output power of a dispenser of the charging module for ultrafast charging.

6. The integrated air mobility flight control system according to claim 1, wherein the aircraft battery checking module checks a battery capacity of a UAM aircraft scheduled to arrive at the vertiport.

7. A method of controlling an integrated air mobility flight control system, comprising:
a flight information checking step, in which destination information and a flight distance to a destination are checked;
a flight-related battery capacity calculating step, in which a battery capacity for the flight distance is calculated based on the flight distance determined in the flight information checking step;
an aircraft battery capacity and charging information checking step, in which a battery capacity of a UAM aircraft parked at a departure vertiport and an estimated charging time of the UAM aircraft are checked; and
a flight-target aircraft determination and assignment information provision step, in which a flight range is checked based on the battery capacity of the UAM aircraft, a UAM aircraft matching a flight schedule is determined, and assignment information is provided.

8. The method of controlling an integrated air mobility flight control system according to claim 7, wherein the aircraft battery capacity and charging information checking step comprises selectively performing ultrafast charging for UAM aircraft through a charging power control module.

9. The method of controlling an integrated air mobility flight control system according to claim 7, further comprising:
a transit and connecting flight checking step, in which a transit vertiport in the vicinity of a flight route and a battery capacity of a connecting UAM aircraft in the transit vertiport are checked, upon determining in the aircraft battery capacity and charging information checking step that the battery capacity of the UAM aircraft in the vertiport is insufficient to arrive at the destination.

10. The method of controlling an integrated air mobility flight control system according to claim 9, further comprising:
a connecting transportation checking step, in which a connectable transportation is further checked, after the transit and connecting flight checking step.

11. The method of controlling an integrated air mobility flight control system according to claim 7, further comprising:
collecting information on an additional UAM aircraft scheduled to arrive at the departure vertiport, in which a battery capacity of the additional UAM aircraft is checked and compared with a battery capacity to be consumed from the departure vertiport to the destination, and a UAM aircraft is determined based on comparison result information.
